# EUROPÄISCHE PATENTSCHRIFT

(11) **EP 2 158 428 B1**
(45) Veröffentlichungstag und Bekanntmachung des Hinweises auf die Patenterteilung: **11.09.2013**
(21) Anmeldenummer: 08801464.2
(22) Anmeldetag: 13.06.2008
(51) Int. Cl.: F21K 99/00, F21V 5/04, F21V 14/06

(54) **BELEUCHTUNGSVORRICHTUNG**
LIGHTING DEVICE
DISPOSITIF D'ÉCLAIRAGE

(30) Priorität: 15.06.2007 DE 202007008430 U
(43) Veröffentlichungstag der Anmeldung: 03.03.2010
(73) Patentinhaber: Heise, Sebastian, 23847 Kastorf (DE)
(72) Erfinder: Heise, Sebastian, 23847 Kastorf (DE)
(74) Vertreter: Glawe, Delfs, Moll
(86) Internationale Anmeldenummer: PCT/EP2008/004786
(87) Internationale Veröffentlichungsnummer: WO 2008/151826

(56) Entgegenhaltungen:
- EP-A- 0 965 789
- EP-A- 1 583 158
- WO-A-2005/093319
- WO-A-2006/072885
- DE-A1- 3 926 618
- DE-A1- 19 519 417
- US-A- 3 484 599
- US-A- 3 600 063
- US-A- 5 775 799
- US-B1- 6 282 027

## Beschreibung

Die Erfindung betrifft eine Beleuchtungsvorrichtung mit einer Lichtquelle und Einrichtungen zum Verändern des Beleuchtungsbereichs, die zwei Anordnungen von durchsichtigen plattenförmigen Bauteilen mit parallelen nebeneinander angeordneten länglichen Abbildungselementen aufweisen, die zumindest auf einer Seite eine von einer Ebene abweichende Oberfläche aufweisen, wobei die Abbildungseigenschaften der Bauteilanordnungen veränderbar sind und die Längsachsen der einen Bauteilanordnung senkrecht zu denjenigen der anderen ausgerichtet sind, Insbesondere betrifft die Erfindung eine Beleuchtungseinrichtung zum Beleuchten von Gebäuden, Sehenswürdigkeiten, Gegenständen in Ausstellungen, für Bühnenbeleuchtung und dergleichen.

Beleuchtungsvorrichtungen verwendet man nicht nur dazu, Räume zu beleuchten und in mehr oder weniger diffuses Licht zu tauchen. Die Beleuchtungsvorrichtungen werden häufig auch verwendet, bewusst das Licht auf gewisse Gegenstände oder in bestimmte Richtungen zu richten. Dabei will man dann aber häufig nur ein gewisses Gebiet beleuchten, zum Beispiel bei der Beleuchtung von Gebäuden nur dieses Gebäude und nicht Nachbargebäude. Um den unerwünschten seitlichen Lichtaustritt in Bereiche, die nicht beleuchtet werden sollen, zu verhindern, ist es bekannt, entsprechende Blenden vor der Beleuchtungseinrichtung vorzusehen. Diese schirmen das Licht ab, bedeuten aber insgesamt einen Lichtverlust. Die Lichtquelle muss daher mehr Licht abgeben, als wenn die gesamte Lichtmenge auf den gewünschten Bereich konzentriert werden könnte.

Die Verwendung von Blenden ist also einerseits eine Quelle für unnötig hohen Energieverbrauch. Ein anderes Problem des hohen Energieverbrauchs und damit unerwünschter Wärmeerzeugung ist die Tatsache, dass für die bekannten Beleuchtungsvorrichtungen normalerweise Glühlampen, Fluoreszenzlampen, Quecksilberdampflampen und dergleichen verwendet werden, bei denen ein großer Teil der zugeführten Energie in Wärme umgesetzt wird.

Bei einer Beleuchtungsvorrichtung der eingangs genannten Art (US 3 600 063) wird als Lichtquelle ein Laser verwendet. Das Laserlicht wird in einem Strahlerweiterer erweitert, um eine großflächige Beleuchtung zu ermöglichen. Dies ist selbstverständlich wegen des geringen Wirkungsgrades von Lasern noch unwirtschaftlicher als die Verwendung der erwähnten Glühlampen, Fluoreszenzlampen oder Quecksilberdampflampen.

Die Erfindung hat sich zur Aufgabe gestellt, eine Beleuchtungsvorrichtung der eingangs genannten Art zu schaffen, mit der gezielt und mit geringem Energieverbrauch Objekte beleuchtet werden können.

Die erfindungsgemäße Lösung besteht darin, dass die Lichtquelle eine matrixförmige Anordnung von Leuchtdioden (LEDs) ist, und, dass die Bauteilanordnungen zwei plattenförmigen Bauteile mit parallelen nebeneinander angeordneten länglichen Abbildungselementen aufweisen, deren Abstand veränderbar ist.

Es wird also hoher Energieverbrauch dadurch vermieden, dass für die Beleuchtung nicht Glühlampen, Fluoreszenzlampen und dergleichen verwendet werden, sondern Leuchtdioden, die einen besonders großen Teil der zugeführten Energie in Licht umwandeln. Solche Leuchtdioden werden seit vielen Jahren als Anzeigemittel für Schalttafeln, Computer und viele Maschinen verwendet. Hier dienen sie aber der neuartigen Verwendung als Lichtquelle für Beleuchtungen.

Durch die zwei Bauteilanordnungen mit parallelen, nebeneinander angeordneten länglichen Abbildungselementen, deren Abbildungseigenschaften veränderbar sind, kann das beleuchtete Gebiet in zwei zueinander senkrechten Richtungen eingestellt werden. Man kann dadurch erreichen, dass das gesamte zur Verfügung stehende Licht auf das gewünschte Objekt gerichtet wird. Irgendwelche Verluste durch Abschattung mit Blenden treten nicht auf.

Die Abbildungseigenschaften der Bauteilanordnungen können dadurch verändert werden, dass die Bauteilanordnungen zwei Elemente mit parallelen nebeneinander angeordneten länglichen Abbildungselementen aufweisen, deren Abstand veränderbar ist. Dabei können die Abbildungselemente parallel zueinander verschoben werden oder aber unter verschiedenen Winkeln zueinander angeordnet werden. Dadurch ändern sich die Abbildungseigenschaften und auch der beleuchtete Bereich in Richtung einer Ebene, die senkrecht zu den Zylinderachsen steht. Das Merkmal, dass die Beleuchtungsvorrichtung zwei Bauteilanordnungen mit jeweils zwei plattenförmigen Bauteilen aufweist, bedeutet nicht, dass diese Bauteilanordnungen voneinander völlig getrennt sind. Zum Beispiel könnten die beiden plattenförmigen Bauteile der beiden Bauteilanordnungen, die ne-beneinander angeordnet sind, auch zusammengebaut sein. Man hätte so immer noch zwei Bauteilanordnungen, deren Abbildungseigenschaften unabhängig voneinander geändert werden können.

Beide Elemente einer oder beider Bauteilanordnungen können dabei konvexe Abbildungselemente aufweisen, das heißt von einer gemeinsamen Platte oder dergleichen konvex vorstehende Flächen.

Andererseits zeichnet sich eine andere vorteilhafte Ausführungsform aus, dass das eine Abbildungselement einer oder beider Bauteilanordnungen konvexe Abbildungselemente und das andere Abbildungselement konkave Abbildungselemente aufweist.

Bei einem Beispiel ist vorgesehen, dass eine vorgesehen, dass eine oder beide Bauteilanordnungen einen plattenförmigen geschlossenen Hohlraum aufweisen, der an einer oder beiden gegenüberstehenden Oberflächen durch parallele starre Stege und zwischen denselben angeordnetes elastisches folienförmiges Material begrenzt ist, und dass eine Einrichtung zum Beaufschlagen des Hohlraum mit einem Über-oder Unterdruck mittels einer Flüssigkeit vorgesehen ist. Je nach Über-oder Unterdruck wölben sich die elastischen folienförmigen Materialien zwischen den Stegen nach außen oder nach innen und erzeugen so konvexe oder konkave in wesentlichen teilzylinderförmige Abbildungselemente. Je nach Größe des Über-oder Unterdrucks kann dabei auch die Brennweite verändert werden. Es werden daher die gleichen Einstellmöglichkeiten wie bei starren Bauteilanordnungen, die gegeneinander verschoben werden können, erreicht. Der Vorteil ist aber die besonders leichte Herstellbarkeit sowie die Tatsache, dass für jede Bauteilanordnung nur ein plattenförmiges Bauteilen benötigt wird, um das Beleuchtungsgebiet einzustellen.

Bei einer anderen vorteilhaften Ausführungsform haben die Abbildungselemente den Querschnitt einer Fresnellinse, wobei die Ringstrukturen der bekannten Fresnellinsen durch lineare, sich entlang den Längsachsen der Abbildungselemente erstreckende Strukturen sind. Dadurch wird bekannterma-ßen eine geringere Bauhöhe ermöglicht.

Bei der erfindungsgemäßen Beleuchtungsvorrichtung ist es möglich, dass der Beleuchtungswinkel in den zu den Längsachsen senkrechten Ebenen auf Werte zwischen 10° und 160°, vorzugsweise zwischen 10° und 120° und insbesondere auf 20° bis 90° einstellbar ist.

Die Form der matrixförmigen Anordnung von Leuchtdioden wird man zweckmäßigerweise daran anpassen, welche Form das beleuchtete Gebiet haben soll, obwohl diese Form selbstverständlich durch die erfindungsgemäßen Bauteilanordnungen verändert werden kann. Bei einer vorteilhaften Ausführungsform ist die matrixförmige Anordnung von Leuchtdioden quadratisch. Eine besonders vorteilhafte Ausführungsform, um starke Beleuchtungswirkungen zu erhalten, zeichnet sich dabei dadurch aus, dass die matrixförmige Anordnung von Leuchtdioden eine Größe von ungefähr 400 x 400 mm hat. Bei einer anderen vorteilhaften Ausführungsform ist die matrixförmige Anordnung von Leuchtdioden rechteckig, wobei sie insbesondere eine Größe von ungefähr 400 x 600 mm hat. Die Leuchtdioden sind dabei zweckmäßigerweise bienenwabenartig angeordnet, wodurch eine möglichst große Anzahl von Leuchtdioden in einer vorgegebenen Fläche untergebracht werden kann. Bei einer anderen vorteilhaften Ausführungsform sind die Dioden in einer quadratischen Struktur angeordnet.

Wie bereits erwähnt, können mit der Anordnung von Leuchtdioden sehr große Lichtleistungen erzeugt werden. Die gesamte elektrische Leistung der Leuchtdioden kann zwischen 100 und 10 kW betragen. Bei einer vorteilhaften Ausführungsform, die einerseits sehr hell leuchtet, andererseits aber noch gut handhabbar ist, beträgt die gesamte elektrische Leistung der Leuchtdioden ungefähr 2000 W.

Um Fehler der sphärischen Aberration zu vermeiden, sind, wenn die von einer Ebene abweichenden Oberflächen der länglichen Abbildungselemente teilzylinderförmig sind, zweckmä-Bigerweise die zylinderförmigen Flächen der Abbildungselemente kleiner als Halbzylinder. Vorteilhafterweise nehmen diese Flächen 1/4 bis 1/72 der Fläche eines entsprechenden Zylinders ein. Besonders vorteilhaft sind dabei Flächen, die 1/10 bis 1/36, ganz besondere aber 1/10 bis 1/18 einer entsprechenden Zylinderoberfläche betragen. Die Zahlenangaben beziehen sich dabei auf den Teil des Winkels von 360°, über den sich der zylinderförmige Teil erstreckt.

Die matrixartige Anordnung von Leuchtdioden, insbesondere wenn es sich um eine größere Anzahl handelt, gibt Licht ab, das im Wesentlichen aus parallelen Lichtbündeln besteht. Dieses Verhalten kann aber erfindungsgemäß dadurch verbessert werden, dass die Leuchtdioden mit Kollimatorlinsen versehen werden. Insbesondere können diese Kollimatorlinsen so ausgebildet sein, dass der Beleuchtungswinkel einer Leuchtdiode 10° oder weniger beträgt.

Die Erfindung wird im Folgenden anhand von vorteilhaften Ausführungsformen unter Bezugnahme auf die beigefügten Zeichnungen beschrieben. Es zeigen:
- Fig. 1-4: schematische Darstellungen des Abbildungsver-haltens von Linsenpaaren;
- Fig. 5: in schematischer perspektivischer Darstellung den prinzipiellen Aufbau einer Ausführungsform der erfindungsgemäßen Beleuchtungsvorrichtung;
- Fig. 6: im Querschnitt eines Beispiels einer Bauteilanordnung;
- Fig. 7: eine detaillierte Darstellung im Querschnitt eine Ausführungsform des Bauteils der Fig. 5;
- Fig. 8: eine detaillierte Darstellung im Querschnitt einer anderen Ausführungsform der Bauteils der Fig. 5; und
- Fig. 9: eine detaillierte Darstellung im Querschnitt einer anderen Ausführungsform des Bauteils der Erfindung.

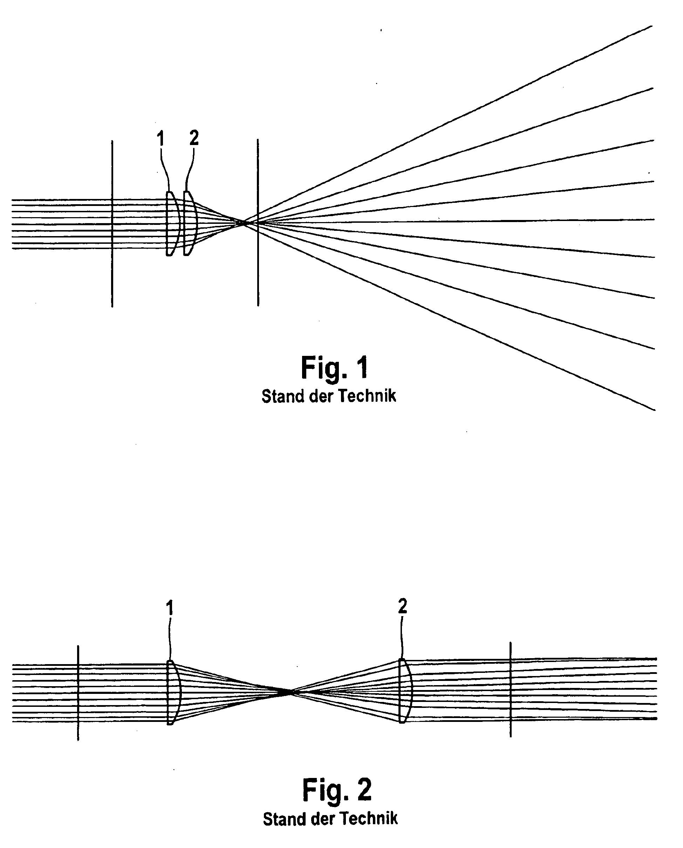

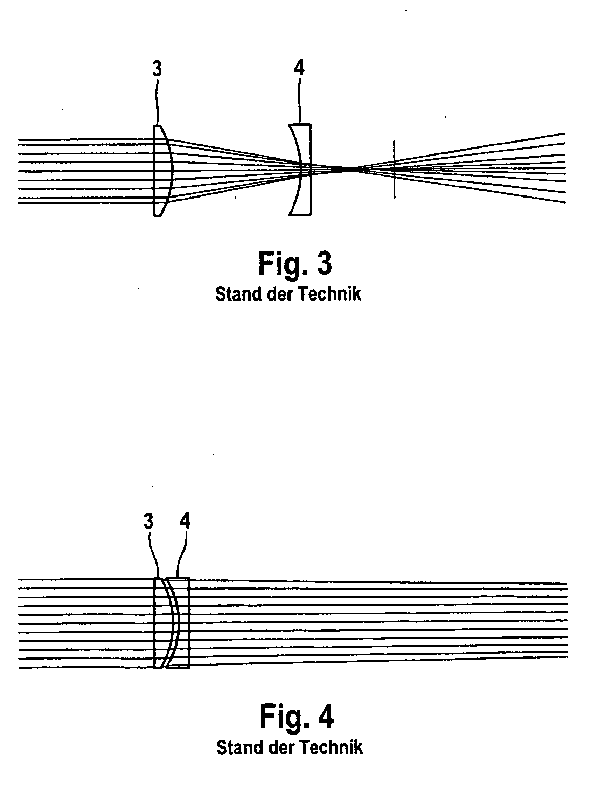

In den Figuren 1 bis 4 ist dargestellt, wie von links kommende parallele Lichtstrahlen durch zwei konvexe Linsen 1,2 (Fig. 1 und 2) oder eine konvexe Linse 3 und eine konkave Linse 4 (Fig. 3 und 4) auf kleinere oder größere Winkelbereiche gelenkt werden können. Dies geschieht in den Figuren durch Veränderung der Abstände der Linsen 1, 2 bzw. 3, 4.

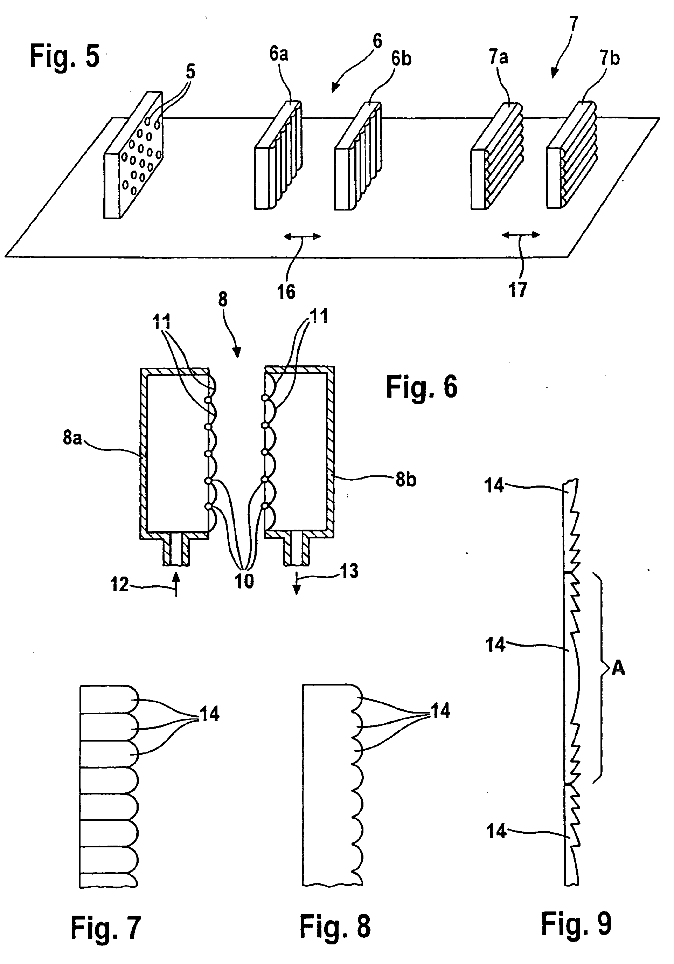

Bei der erfindungsgemäßen Ausführungsform werden nun nicht übliche rotationssymmetrische Linsen, sondern längliche Abbildungselemente verwendet, von denen mehrere parallel zueinander angeordnet sind. In Fig. 5 ist der prinzipielle Aufbau einer erfindungsgemäßen Ausführungsform gezeigt. Diese weist eine matrixförmige Anordnung von Leuchtdioden 5 auf. Das von diesen emittierte Licht trifft auf zwei Anordnungen 6, 7, die zwei Bauteile 6a, 6b bzw. 7a, 7b aufweisen, die an einer ihrer Oberfläche mit parallelen aneinander grenzenden Teilzylindern versehen sind. Selbstverständlich sind die Bauteile dabei durchsichtig. Durch Veränderung der Abstände der beiden Bauteile 6a, 6b bzw. 7a, 7b in Richtung der Doppelpfeile 16, 17 kann dabei der Beleuchtungswinkel des Lichtbündels entsprechend den Fig. 1 bis 4 in zwei zueinander senkrechten Richtungen verändert werden. Dies ist auch möglich, wenn die Bauteile 6b und 7a einstückig zusammengebaut sind. Man erhält dadurch ein rechteckiges Beleuchtungsfeld, dessen Breite und Höhe veränderbar ist. Insbesondere ist dieses in einem Bereich von 10° bis 160°, insbesondere 10° bis 120°, vorzugsweise 20° bis 90° veränderbar. Durch Schrägstellung der Bauteile 6a, 6b bzw. 7a, 7b können auch trapezförmige Beleuchtungsfelder erzeugt werden.

In Fig. 6 ist ein Beispiel von Bauteilanordnungen 8 gezeigt. Die Elemente 8a und 8b sind dabei quaderförmige Hohlkörper, die an einer Seite eine Reihe von parallelen Stegen 10 aufweisen. Zwischen diesen Stegen sind elastische Folien 11 angeordnet. Im linken Teil der Fig. 6 ist dabei durch einen Pfeil 12 angedeutet, dass ein Überdruck durch eine Flüssigkeit im Hohlraum angelegt wird, wodurch sich die Folien 11 konvex nach außen wölben und aufgrund des Brechungsindexes der Flüssigkeit konvexe Abbildungselemente entstehen. Im rechten Teil von Fig. 6 ist durch den Pfeil 13 ein Unterdruck angedeutet, so dass im Zusammenwirken mit der im Element 8b vorhandenen Flüssigkeit konkave Abbildungselemente entstehen. Durch Zusammenwirken der konvexen und konkaven Abbildungselemente, oder indem beide Abbildungselemente konvexe Abbildungselemente sind, kann wieder analog wie bei der Ausführungsform der Fig. 5 der Beleuchtungswinkel in einer Richtung verändert werden. Die Veränderung des Beleuchtungswinkels in der dazu senkrechte Richtung kann dann durch eine entsprechende mit Flüssigkeit gefüllte Einrichtung oder aber durch zwei starre Elemente erfolgen, deren Abstand gemäß der Ausführungsform von Fig. 5 verändert werden kann. Obwohl in der Fig. 6 zwei Bauteile 8a, 8b gezeigt sind, wird man normalerweise mit einem Bauteile 8a mit konvexen Abbildungselementen auskommen, da deren Brennweite ja variierbar ist, so dass des Beleuchtungsfeld auch ohne ein zweites Bauteil variiert werden kann.

In Fig. 7 und 8 sind im Querschnitt im vergrößerten Maßstab Bauteilanordnungen gezeigt, die bei der Ausführungsform der Fig. 5 verwendet werden können. Die Ausführungsform der Fig. 7 weist einzelne leistenförmige Elemente 14 auf, die Seite an Seite angeordnet sind, auf ihrer in der Fig. rechten Oberfläche eine zylindrische Wölbung aufweisen und damit die Abbildungselemente 14 bilden. Die zylindrischen Abbildungselemente 14 könnten auch in Abständen angeordnet sein, wobei die Zwischenräume mit undurchsichtigen Blenden zu versehen wären, was allerdings Lichtverlust bedeuten würde Bei der Ausführungsform der Fig. 8 ist eine Platte mit streifenförmigen Erhöhungen versehen, die die Abbildungselemente 14 bilden.

In Fig. 9 ist eine andere Art von Abbildungselementen gezeigt, die im Querschnitt einer Fresnellinse entsprechen. Die kreisrunden Strukturen einer üblichen Fresnellinse sind dabei in die Länge gezogen und sind ländliche Gebilde, die sich über die Länge der Bauteile erstrecken. Die Struktur einer Fresnellinse hat dabei den bekannten Vorteil, dass die Gesamtwölbung in einzelne Wölbungsbereiche aufgeteilt wird, so dass die Gesamtdicke der Abbildungselemente geringer ist als bei üblichen Abbildungselementen. Der Bereich eines Abbildungselementes 14 ist dabei mit A bezeichnet.

## Patentansprüche

1. Beleuchtungsvorrichtung mit einer Lichtquelle und Einrichtungen zum Verändern des Beleuchtungsbereichs, die zwei Anordnungen (6, 7, 8) von durchsichtigen plattenförmigen Bauteilen (6a, 6b; 7a, 7b; 8a, 8b) mit parallelen nebeneinander angeordneten länglichen Abbildungselementen (14) aufweisen, die zumindest auf einer Seite eine von einer Ebene abweichende Oberfläche aufweisen, wobei die Abbildungseigenschaften der Bauteilanordnungen (6, 7, 8) veränderbar sind und die Längsachsen der einen Bauteilanordnung (6, 7, 8) senkrecht zu denjenigen der anderen (7, 8, 6) ausgerichtet sind, **dadurch gekennzeichnet, dass** die Lichtquelle eine matrixförmige Anordnung von Leuchtdioden (LEDs 5) ist, und dass die Bauteilanordnungen (6, 7, 8) zwei plattenförmige Bauteile (6a, 6b; 7a, 7b; 8a, 8b) mit parallelen nebeneinander angeordneten länglichen Abbildungselementen (14) aufweisen, deren Abstand veränderbar ist.

2. Beleuchtungsvorrichtung nach Anspruch 1, **dadurch gekennzeichnet, dass** sie Verstelleinrichtungen aufweisen, mit denen die plattenförmigen Bauteile (6a, 6b; 7a, 7b; 8a, 8b) parallel zueinander verschiebbar sind.

3. Beleuchtungsvorrichtung nach Anspruch 1 oder 2, **dadurch gekennzeichnet, dass** sie Verstelleinrichtungen aufweist, mit denen die plattenförmigen Bauteile (6a, 6b; 7a, 7b; 8a, 8b) in einem winkel zueinander anordbar und verstellbar sind.

4. Beleuchtungsvorrichtung nach einem der Ansprüche 1 bis 3, **dadurch gekennzeichnet, dass** beide plattenförmigen Bauteile (6a, 6b; 7a, 7b; 8a, 8b) einer oder beider Bauteilanordnungen (6, 7, 8) konvexe Abbildungselemente (14) aufweisen.

5. Beleuchtungsvorrichtung nach einem der Ansprüche 1 bis 4, **dadurch gekennzeichnet, dass** das eine plattenförmige Bauteil (6a; 7a; 8a) einer oder beider Bauteilanordnungen (6, 7, 8) konvexe Abbildungselemente und das jeweils andere plattenförmige Bauteil (6b; 7b; 8b) konkave Abbildungselemente (14) aufweist.

6. Beleuchtungsvorrichtung nach einem der Ansprüche 1 bis 5, **dadurch gekennzeichnet, dass** die matrixförmige Anordnung von Leuchtdioden (5) rechteckig ist.

7. Beleuchtungsvorrichtung nach einem der Ansprüche 1 bis 6, **dadurch gekennzeichnet, dass** die Leuchtdioden (5) bienenwabenartig angeordnet sind.

8. Beleuchtungsvorrichtung nach einem der Ansprüche 1 bis 7, **dadurch gekennzeichnet, dass** die gesamte Leistung der Leuchtdioden (5) zwischen 100 W und 10 kW beträgt.

9. Beleuchtungsvorrichtung nach einem der Ansprüche 1 bis 8, **dadurch gekennzeichnet, dass** die von einer Ebene abweichenden Oberflächen der länglichen Abbildungselemente (14) teilzylinderförmig sind und die zylindrischen Flächen kleiner sind als die Hälfte einer entsprechenden Zylinderfläche.

10. Beleuchtungsvorrichtung nach Anspruch 9, **dadurch gekennzeichnet, dass** die zylindrischen Flächen der länglichen Abbildungselemente (14) kleiner sind als 1/4 bis 1/72 einer entsprechenden Zylinderfläche.

11. Beleuchtungsvorrichtung nach Anspruch 9, **dadurch gekennzeichnet, dass** die zylindrischen Flächen der länglichen Abbildungselemente (14) kleiner sind als 1/10 bis 1/36 einer entsprechenden Zylinderfläche.

12. Beleuchtungsvorrichtung nach Anspruch 9, **dadurch gekennzeichnet, dass** die zylindrischen Flächen der länglichen Abbildungselemente (14) kleiner sind als 1/10 bis 1/18 einer entsprechenden Zylinderfläche.

13. Beleuchtungsvorrichtung nach einem der Ansprüche 1 bis 12, **dadurch gekennzeichnet, dass** die von einer Ebene abweichenden Oberflächen der länglichen Abbildungselemente (14) den Querschnitt einer Fresnellinse haben.

14. Beleuchtungsvorrichtung nach einem der Ansprüche 1 bis 13, **dadurch gekennzeichnet, dass** die Leuchtdioden (5) mit Kollimatorlinsen versehen sind.

15. Beleuchtungsvorrichtung nach Anspruch 14, **dadurch gekennzeichnet, dass** die Kollimatorlinsen den von den Leuchtdioden (5) ausgestrahlten Lichtkegel auf einen Öffnungswinkel von 10° begrenzen.

## Claims

1. Lighting device comprising a light source and units for changing the illumination region, which have two arrangements (6, 7, 8) of transparent plate-type components (6a, 6b; 7a, 7b; 8a, 8b) having parallel elongate imaging elements (14) which are arranged alongside one another and which have a surface deviating from a plane at least on one side, wherein the imaging properties of the component arrangements (6, 7, 8) are changeable and the longitudinal axes of one component arrangement (6, 7, 8) are oriented perpendicular to those of the other component arrangements (7, 8, 6), **characterized in that** the light source is a matrix-type arrangement of light emitting diodes (LEDs 5), and **in that** the component arrangements (6, 7, 8) have two plate-type components (6a, 6b; 7a, 7b; 8a, 8b) having parallel elongate imaging elements (14) arranged alongside one another, the spacing of which is changeable.

2. Lighting device according to Claim 1, **characterized in that** it has adjusting units by means of which the plate-type components (6a, 6b; 7a, 7b; 8a, 8b) are displaceable parallel to one another.

3. Lighting device according to Claim 1 or 2, **characterized in that** it has adjusting units by means of which the plate-type components (6a, 6b; 7a, 7b; 8a, 8b) can be adjusted and can be arranged at an angle with respect to one another.

4. Lighting device according to any of Claims 1 to 3, **characterized in that** both plate-type components (6a, 6b; 7a, 7b; 8a, 8b) of one or both component arrangements (6, 7, 8) have convex imaging elements (14).

5. Lighting device according to any of Claims 1 to 4, **characterized in that** one plate-type component (6a; 7a; 8a) of one or both component arrangements (6, 7, 8) has convex imaging elements and the respective other plate-type component (6b; 7b; 8b) has concave imaging elements (14).

6. Lighting device according to any of Claims 1 to 5, **characterized in that** the matrix-type arrangement of light emitting diodes (5) is rectangular.

7. Lighting device according to any of Claims 1 to 6, **characterized in that** the light emitting diodes (5) are arranged in honeycomb-like fashion.

8. Lighting device according to any of Claims 1 to 7, **characterized in that** the total power of the light emitting diodes (5) is between 100 W and 10 kW.

9. Lighting device according to any of Claims 1 to 8, **characterized in that** those surfaces of the elongate imaging elements (14) which deviate from a plane are partial-cylinder-shaped and the cylindrical areas are smaller than half of a corresponding cylinder area.

10. Lighting device according to Claim 9, **characterized in that** the cylindrical areas of the elongate imaging elements (14) are smaller than 1/4 to 1/72 of a corresponding cylinder area.

11. Lighting device according to Claim 9, **characterized in that** the cylindrical areas of the elongate imaging elements (14) are smaller than 1/10 to 1/36 of a corresponding cylinder area.

12. Lighting device according to Claim 9, **characterized in that** the cylindrical areas of the elongate imaging elements (14) are smaller than 1/10 to 1/18 of a corresponding cylinder area.

13. Lighting device according to any of Claims 1 to 12, **characterized in that** those surfaces of the elongate imaging elements (14) which deviate from a plane have the cross section of a Fresnel lens.

14. Lighting device according to any of Claims 1 to 13, **characterized in that** the light emitting diodes (5) are provided with collimator lenses.

15. Lighting device according to Claim 14, **characterized in that** the collimator lenses limit the light cone emitted by the light emitting diodes (5) to an aperture angle of 10°.

## Revendications

1. Dispositif d'éclairage comprenant une source lumineuse et des dispositifs permettant de modifier la zone d'éclairage, qui présentent deux agencements (6, 7, 8) de composants transparents en forme de plaques (6a, 6b ; 7a, 7b ; 8a, 8b) ayant des éléments de dessin oblongs agencés parallèlement les uns à côté des autres (14) qui présentent, au moins sur un côté, une surface s'écartant d'un plan, étant entendu que les propriétés des dessins des agencements de composants (6, 7, 8) peuvent être modifiées et que les axes longitudinaux d'un agencement de composant (6, 7, 8) sont dirigés perpendiculairement par rapport à ceux de l'autre (7, 8, 6), **caractérisé en ce que** la source lumineuse est un agencement en forme de matrice de diodes électroluminescentes (DEL 5) et **en ce que** les agencements de composants (6, 7, 8) présentent deux composants en forme de plaques (6a, 6b ; 7a, 7b ; 8a, 8b) ayant des éléments de dessins oblongs agencés parallèlement les uns à côté des autres (14), dont l'écartement peut être modifié.

2. Dispositif d'éclairage selon la revendication 1, **caractérisé en ce qu'**il présente des dispositifs de réglage au moyen desquels les composants en forme de plaques (6a, 6b ; 7a, 7b ; 8a, 8b) peuvent être déplacés parallèlement les uns par rapport aux autres.

3. Dispositif d'éclairage selon la revendication 1 ou 2, **caractérisé en ce qu'**il présente des dispositifs de réglage au moyen desquels les composants en forme de plaques (6a, 6b ; 7a, 7b ; 8a, 8b) peuvent être agencés et réglés dans un angle les uns par rapport aux autres.

4. Dispositif d'éclairage selon l'une des revendications 1 à 3, **caractérisé en ce que** les deux composants en forme de plaques (6a, 6b ; 7a, 7b ; 8a, 8b) présentent un ou deux agencements de composants (6, 7, 8) d'éléments de dessin (14) convexes.

5. Dispositif d'éclairage selon l'une des revendications 1 à 4, **caractérisé en ce qu'**un composant en forme de plaque (6a ; 7a ; 8a) présente un ou les deux agencements de composants (6, 7, 8) d'éléments de dessin convexes et l'autre composant en forme de plaque (6b ; 7b ; 8b) respectif des éléments de dessin (14) concaves.

6. Dispositif d'éclairage selon l'une des revendications 1 à 5, **caractérisé en ce que** l'agencement en forme de matrice de diodes électroluminescentes (5) est rectangulaire.

7. Dispositif d'éclairage selon l'une des revendications 1 à 6, **caractérisé en ce que** les diodes électroluminescentes (5) sont agencées à la manière d'un nid d'abeilles.

8. Dispositif d'éclairage selon l'une des revendications 1 à 7, **caractérisé en ce que** la puissance totale des diodes électroluminescentes (5) est comprise entre 100 W et 10 kW.

9. Dispositif d'éclairage selon l'une des revendications 1 à 8, **caractérisé en ce que** les surfaces des éléments de dessin oblongs (14) s'écartant d'un plan ont une forme de cylindre primitif et les surfaces cylindriques sont plus petites que la moitié d'une surface de cylindre correspondante.

10. Dispositif d'éclairage selon la revendication 9, **caractérisé en ce que** les surfaces cylindriques des éléments de dessin oblongs (14) sont plus petites que 1/4 à 1/72 d'une surface de cylindre correspondante.

11. Dispositif d'éclairage selon la revendication 9, **caractérisé en ce que** les surfaces cylindriques des éléments de dessin oblongs (14) sont plus petites que 1/10 à 1/36 d'une surface de cylindre correspondante.

12. Dispositif d'éclairage selon la revendication 9, **caractérisé en ce que** les surfaces cylindriques des éléments de dessin oblongs (14) sont plus petites que 1/10 à 1/18 d'une surface de cylindre correspondante.

13. Dispositif d'éclairage selon l'une des revendications 1 à 12, **caractérisé en ce que** les surfaces des éléments de dessin oblongs (14) s'écartant d'un plan ont la section d'une lentille à échelons.

14. Dispositif d'éclairage selon l'une des revendications 1 à 13, **caractérisé en ce que** les diodes électroluminescentes (5) sont pourvues de lentilles de collimation.

15. Dispositif d'éclairage selon la revendication 14, **caractérisé en ce que** les lentilles de collimation limitent le cône lumineux émis par les diodes électroluminescentes (5) à un angle d'ouverture de 10°.
